# EUROPEAN PATENT APPLICATION

(11) **EP 4 328 817 A1**
(43) Date of publication of application: **28.02.2024**
(21) Application number: 23192355.8
(22) Date of filing: 21.08.2023
(51) Int. Cl.: G06Q 10/02, G06Q 50/14

(54) **SYSTEM AND METHOD FOR SEARCHING FOR FARES FOR TRAVELLING BY MEANS OF TRANSPORT, PREFERABLY AIRPLANES**

(30) Priority: 25.08.2022 IT 202200017643
(71) Applicant: Bismillah Travel S.r.l., 37129 Verona (IT)
(72) Inventor: Kazi, Mohammad Shakil, 37129 Verona (IT); Kazi, Abdul Hannan, 37129 Verona (IT)
(74) Representative: Anselmi, Davide

(57) **Abstract**

A system for searching for a means of transport for making a journey from a departure place to an arrival place, comprising a terminal (8) having a user interface (19) configured to receive identification data of the user or multiple users and a selection of the generic user type among a plurality of predefined generic user types.

A processing server (3) configured to:
- forward said verification signal (7) to said one or more GDS platforms (5) or to other reservation systems;
- identify one or more PTCs and/or FTCs falling within said selected generic user type by means of said verification signal (7);
- perform one or more searches for each of the identified PTCs and/or FTCs;
- receive one or more response signals (11) from said one or more GDS platforms (5) containing the solutions and fares for the user to make said journey corresponding to each of the identified PTCs and/or FTCs;
- send the contents of one or more of said response signals (11) to said terminal (8) to make them visible by means of the user interface (19).

## Description

### Technical field

The present invention relates to a search system and method for verifying the availability of means of transport such as airplanes, trains, ships,... and for viewing the related travel fares.

The present invention is preferably aimed at travel agencies or, in any case, B2B companies, but could also be applied to B2C companies so that it can be directly usable by customers.

That is, the present invention relates to a software for travel agencies used to search for personalized fares capable of communicating with GDS systems or directly with airlines to search for the best fares in a simple manner and without knowing the specific PTC or FTC code that the company has assigned to a category of persons of interest.

Some specific abbreviations are used in the relevant technical field and for this document, as set out below:
- GDS platform or GDS, i.e., the global distribution system of company contents such as airline, hotel, car rental, etc. For example, the most popular GDSs are Amadeus^{®}, Sabre^{®},Travel Port^{®};
- IATA (International Air Transport Association), a travel agency authorised to issue tickets on behalf of, for example, the airline. IATA agencies are also responsible for settling the payment (preferably by means of BSP circuit - Billing and Settlement Plan) of all the transactions carried out through GDS and also the payment of the IATA agencies, which in turn settle the payment with the airline. IATA agencies are also called Consolidator or Wholesaler;
- PCC (Pseudo City Code), i.e., unique number to identify the issuing travel agency that generates the reservation;
- Published Fares (visible by any travel agency with a PCC);
- Private Fares (visible only by IATA travel agencies usually with specific references and volumes negotiated with each individual airline);
- PTC (Passenger Type Code), which can be:
   ∘ LBR (Labourer/worker);
   ∘ Resident;
   ∘ IT/Tour Operator (Inclusive Tour);
   ∘ VFR (visit Friends and Relatives);
   ∘YTH (Youth under 26);
   ∘SEN (Senior over 65);
   ∘MIL (Military);
   ∘ Corporate (i.e., fare dedicated to employees of a company under contract).

### Background of the invention

Currently, the search systems used by travel agencies are organised as follows:
- the Travel Agency has its own PCC, from which the PNR (Passenger Name Record) is generated or the reservation following the passenger's request;
- the Agency queues the PNR to the Consolidator/issuing agency, requesting a certain fare;
- the operator of the Consolidator/issuing agency checks the queue and stores the fare requested by the Agency;
- the Travel Agency proposes the fare to the end customer;
- after the passenger's confirmation, the Travel Agency enters the payment method and requests the ticket to be issued to the Consolidator, queuing the PNR;
- the Consolidator operator verifies the validity of the payment method requested and issues the ticket (alternatively, the operator contacts the Travel Agency to communicate any anomalies).

In the presence of one or more automation scripts for the above processes, the system is simplified as follows:
- the Travel Agency has its own PCC, from which the PNR (Passenger Name Record) is generated or the reservation following the passenger's request
- the Agency queues the PNR to the Consolidator/issuing agency, but the Agency does not have the possibility to specify the fare, so the script stores the fare following the Consolidator's logic, which normally saves the most basic fare or only the private fare of a specific PTC. Then the Travel Agency that owns the PNR, if it needs a different fare, must request a manual intervention;
- the Agency inserts a payment method;
- the Agency launches another queue to issue the ticket;
- The script reads the PNR, verifies the validity of the fare and the payment method, and issues the ticket.

Given the above, with regard to the search for on-going fares or reservations, currently the known systems envisage that the User (end customer or agency) enters the departure and arrival airport with the related travel date, entering the type of PTC or FTC and possibly the corporate code (LBR/VFR/ETN/ ...) to be used to search for the fare. The system performs the search in the GDSs with the parameters entered by the user and returns the requested fare with the related PTC to be used.

However, such systems have many drawbacks, which are set out below:
- the Travel Agency or any user cannot know how the fares for a certain type of passenger have been loaded. For example, in some cases the fares dedicated to foreign passengers are loaded as "LBR" (Workers' Rate) by some companies, while other companies load it as "VFR" (Visit friends and relatives) or as "EMI" (Emigrant) but they have the same purpose of use, that is, they can only be used by foreign passengers living abroad to return to their homeland.
- The system can request a PTC Type for each Adult/Child/Infant search. Consequently, the system responds only with that PTC type and consequently does not carry out the comparison with other fares.

To perform a search, for example from Milan Malpensa to Lagos, with an ethnic fare, a user today must perform one search at a time with different types of PTCs: one with LBR, one with VFR, one with EMI... because each airline loads the fares according to their discretion. Thus for a destination where there are 10/15 airlines that have loaded fares with 10/15 different PTCs or FTCs, the Agency or User must carry out a search for each individual airline. Furthermore, the Agency or User must also know which PTC which airline used to load such ethnic fares.

### Objects of the present invention

In this context, the technical task underlying the present invention is to propose a search system and method which obviate the drawbacks in the known art as described above.

In particular, an object of the present invention is to provide a search system and method which is capable of simplifying the searches that are performed by the Agency or by a User independently of the assignment of the fare codes by the different flight companies or GDSs.

The stated technical task and specified objects are substantially achieved by a search system and method, which comprise the technical features disclosed in the respective independent claims. The dependent claims correspond to further advantageous aspects of the invention.

### Brief description of the drawings

Further characteristics and advantages of the present invention will become more apparent from the indicative and thus non-limiting description of a preferred but non-exclusive embodiment of a search system and method, as illustrated in the attached drawings, in which:
- figure 1 illustrates, in schematic view, a block diagram of the system according to the present invention;
- figure 2 illustrates a block diagram related to the quotation flow of a ticket;
- figure 3 illustrates, in schematic view, an example screen showing the results of an example search.

With reference to the drawings, they serve solely to illustrate embodiments of the invention for the purpose of better clarifying, in combination with the description, the inventive principles at the basis of the invention.

### Description of one or more preferred embodiments of the present invention

The present invention relates to a system and a method for searching for a means of transport for making a journey from a departure place to an arrival place.

With reference to the figures, the system has been generically indicated with the number 1.

The other numerical references refer to technical characteristics of the invention which, barring indications otherwise or evident structural incompatibilities, the person skilled in the art will know how to apply to all the variant embodiments described.

For the continuation of the present description, all the previously mentioned abbreviations are referred to.

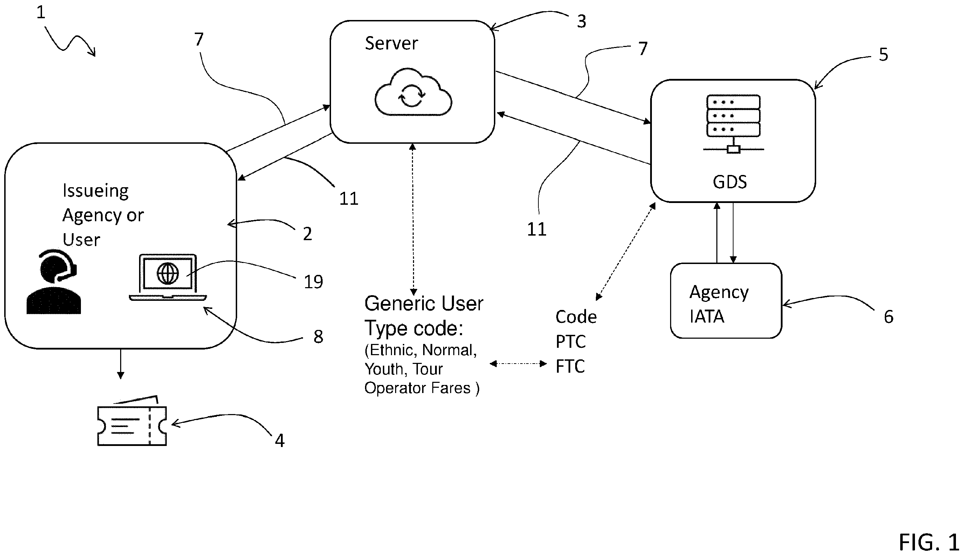

In particular, the method and the system according to the present invention have been schematically represented in figure 1 by a block representing a terminal 8 accessible to a user or an agency, a block representing a communication server 3, a block representing the GDS platform 5 or other reservation systems and a block representing the IATA Agency 6 or Consolidator 6. Such a communication server 3 is configured to operate automatically so as to optimise the waiting times for interfacing with the GDS platform 5.

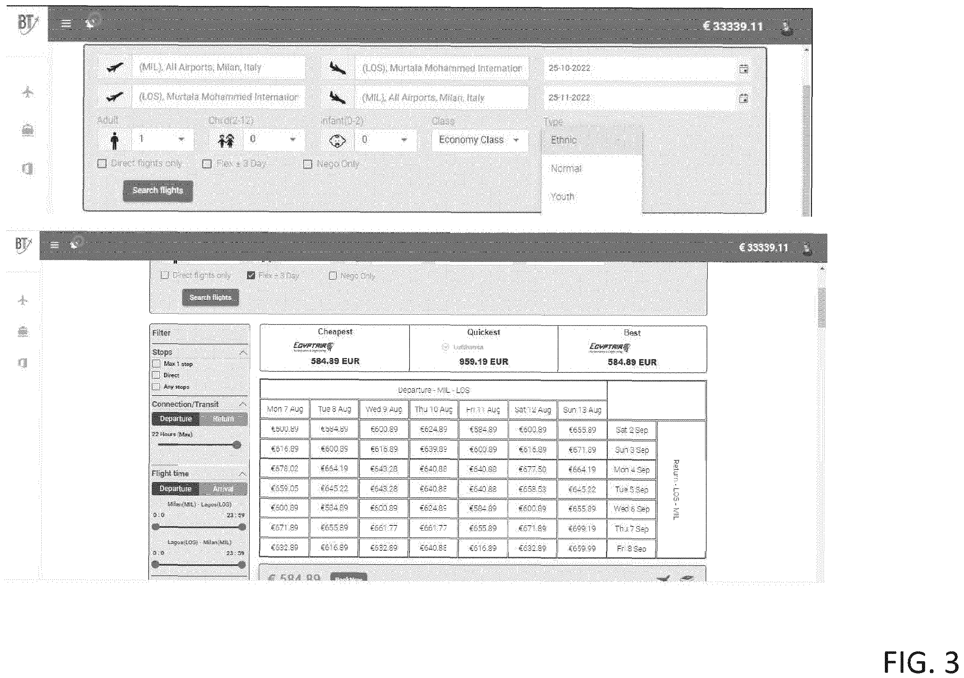

The terminal 8 has a user interface 19 (screen or controls) configured to:
o receive search data comprising one or more departure and arrival dates and the departure and arrival place (e.g., departure and arrival airport);
o receive identification data of the user (adult, child, infant...) or multiple users (number of users) and a selection of the generic user type among a plurality of predefined generic user types. Preferably, said generic user type can be: Ethnic, Normal, Youth, Tour Operator Fares (figure 3).
∘ generate a verification signal 7 comprising the search data and the user identification data and send said verification signal 7 to the processing server.

The processing server 3 is configured to receive said verification signal 7 and is networked to one or more GDS platforms 5 or other reservation systems.

As will be better explained in the following, in the research step it is possible to select one or more dates with a predefined flexibility (e.g., +/-3 days) so as to be able to then compare the various fares.

In accordance with the present invention, such a processing server 3 is further configured to:
- forward said verification signal 7 to several GDS platforms 5;
- identify one or more PTCs and/or FTCs falling within said selected generic user type by means of said verification signal 7;
- perform one or more searches for each of the identified PTCs and/or FTCs;
- receive a plurality of response signals 11 from said GDS platforms 5 containing the solutions and fares for the user to make said journey corresponding to each of the identified PTCs and/or FTCs;
- send the contents of one or more of said response signals 11 to said terminal 8 to make them visible by means of the user interface 19.

That is, the codes assigned by the various PTC, FTC companies are more specific and fall within the more generic codes defined as generic user type (Worker, Normal, Youth, Tour Operator Fares).

Advantageously, to perform the search by means of the present invention, thanks to the user interface 19 labelled by generic type of use of the fare (for example ethnic), it is sufficient for the user to perform the search by selecting the generic type from one of those predefined. At that point the system launches the simultaneous searches using the PTC/FTC etc... indicated by the various airlines depending on how they have loaded that fare (e.g., ethnic) and on different reservation systems including the GDSs 5.

Advantageously, the searches are performed simultaneously so as to optimise the response times.

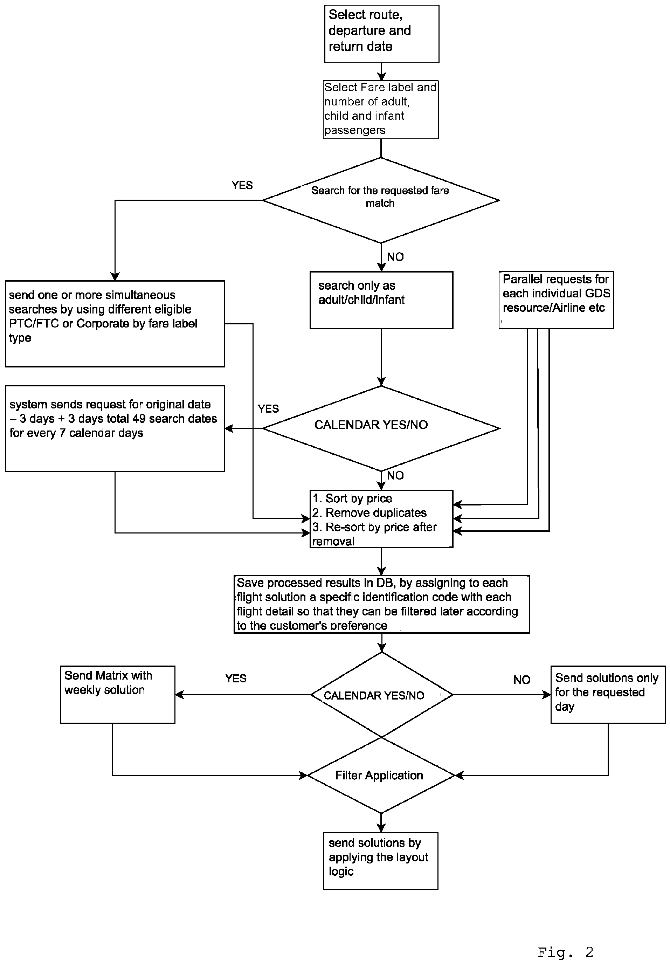

Furthermore, as shown in figure 2 (right part of the diagram), said verification signal 7 can be directly forwarded in parallel to several GDS platforms 5 or other reservation systems without any selection of the type of fare or user identification data having been made.

Alternatively, figure 2 (central part) shows that the processing server 3 is configured to perform one or more searches by "simple" adult, child or infant user type.

As for the dates (calendar), the system is configured to return the solutions of a plurality of dates by crossing the departure and arrival dates with each other.

In particular, the processing server 3 is configured to:
- perform a search for a plurality of dates selected from the calendar;
- receive a response signal 11 for each date;
- organise the data contained in said response signals 11 according to a matrix comprising departure dates and arrival dates.

For example, selecting a departure date with +/- 3 days flexibility and an arrival date with +/- 3 days flexibility results in a combination of 7 departure dates x 7 arrival dates that are placed on an output matrix containing the various fares (figure 3).

It should be noted that advantageously the present system allows said search to be performed for a plurality of dates selected from the calendar as a function of the previous selection of the user type so as to show the data related to the pre-selected user type.

Furthermore, the present system allows to organise the data in said matrix so as to be able to filter them as a function of one or more filters that can be selected by the user. For example, in figure 3 (column on the left) the filters shown are:
- maximum one stopover;
- direct flight;
- connection time;

Thereby, the matrix can be dynamically organised as a function of user needs and not only based on the cost.

Furthermore, the processing server 3 is configured to save the results on a database associated therewith.

In addition, the processing server 3 is configured to:
- sort the contents by price or by other criteria;
- remove the duplicate contents;
- re-sort by price after the removal.

Furthermore, the processing server 3 is configured to save the contents, assigning an identification code to each solution so as to be able to carry out a subsequent filtering of said contents according to a predefined filter at the user's discretion.

A further object of the present invention is a method for searching for a means of transport for making a journey from a departure place to an arrival place. Such a method is directly derived from what is disclosed above in relation to the system to which full reference is made hereinbelow.

In particular, the method provides to arrange said terminal 8 having a user interface 19 configured to:
∘receive search data comprising one or more departure and arrival dates and the departure and arrival place;
∘ receive identification data of the user or multiple users and a selection of the generic user type among a plurality of predefined generic user types;
∘ generate a verification signal 7 comprising the search data and the user identification data and send said verification signal 7 to a processing server 3;

Furthermore, the method provides to arrange a processing server 3 configured to receive said verification signal 7, in which said processing server 3 is connected to one or more GDSs 5 or other reservation system. In particular, the method also comprises the following operating steps:
- forwarding said verification signal 7 to said one or more GDS platforms 5;
- identifying one or more PTCs and/or FTCs falling within said selected generic user type by means of said verification signal 7;
- performing one or more searches for each of the identified PTCs and/or FTCs;
- receiving one or more response signals 11 from said one or more GDS platforms 5 containing the solutions and fares for the user to make said journey corresponding to each of the identified PTCs and/or FTCs;
- sending the contents of one or more of said response signals 11 to said terminal 8 to make them visible by means of the user interface 19.

The present invention allows to achieve the set objects.

In fact, the user is capable of searching for the most convenient fare that can be sold to a certain type of passengers such as an ethnic fare. Therefore, the present invention allows the user to perform searches without knowing the complexity of the PTC /FTC and above all how each individual airline has loaded its own fares and without having to perform searches on each airline as is currently the case.

## Claims

1. A system for searching for a means of transport for making a journey from a departure place to an arrival place, comprising:
- a terminal (8) having a user interface (19) configured to:
∘receive search data comprising one or more departure and arrival dates and the departure and arrival place;
∘receive identification data of the user or multiple users and a selection of the generic user type among a plurality of predefined generic user types;
∘ generate a verification signal (7) comprising the search data and the user identification data and send said verification signal (7) to a processing server (3);
- a processing server (3) configured to receive said verification signal (7) and being networked to one or more GDS platforms (5) or other reservation systems;
said processing server (3) is configured to:
- forward said verification signal (7) simultaneously to several GDS platforms (5) or to other reservation systems, in parallel;
- identify one or more PTCs and/or FTCs falling within said selected generic user type by means of said verification signal (7);
- perform several searches for each of the identified PTCs and/or FTCs;
- receive several response signals (11) from said GDS platforms (5) containing the solutions and fares for the user to make said journey corresponding to each of the identified PTCs and/or FTCs;
- send the contents of said response signals (11) to said terminal (8) to make them visible by means of the user interface (19).

2. The system according to any one of the preceding claims, **characterised in that** said processing server (3) is configured to perform one or more searches by adult, child or infant user type.

3. The system according to any one of the preceding claims, **characterised in that** said processing server (3) is configured to:
- perform a search for a plurality of dates selected from the calendar;
- receive a response signal (11) for each date;
- organise the data contained in said response signals (11) according to a matrix comprising departure dates and arrival dates.

4. The system according to any one of the preceding claims, **characterised in that** said processing server (3) is configured to save the results on a database associated therewith.

5. The system according to any one of the preceding claims, **characterised in that** said processing server (3) is configured to remove the duplicate contents.

6. The system according to any one of the preceding claims, **characterised in that** said processing server (3) is configured to sort the contents by price.

7. The system according to claim 5, **characterised in that** said processing server (3) is configured to save the contents by assigning an identification code to each option.

8. The system according to claim 7, **characterised in that** said processing server (3) is configured to filter said contents according to a predefined filter.

9. A method for searching for a means of transport for making a journey from a departure place to an arrival place, comprising the following operating steps:
- providing a terminal (8) having a user interface (19) configured to:
o receive search data comprising one or more departure and arrival dates and the departure and arrival place;
o receive identification data of the user or multiple users and a selection of the generic user type among a plurality of predefined generic user types;
∘ generate a verification signal (7) comprising the search data and the user identification data and send said verification signal (7) to a processing server (3);
- providing a processing server (3) configured to receive said verification signal (7) and being networked to one or more GDS platforms (5) or other reservation systems;
**characterised in that** it further comprises the following operating steps:
- forwarding said verification signal (7) simultaneously to several GDS platforms (5) or to other reservation systems, in parallel;
- identifying one or more PTCs and/or FTCs falling within said selected generic user type by means of said verification signal (7);
- performing several searches for each of the identified PTCs and/or FTCs;
- receiving several response signals (11) from said GDS platforms (5) containing the options and fares for the user to make said journey corresponding to each of the identified PTCs and/or FTCs;
- sending the contents of one or more of said response signals (11) to said terminal (8) to make them visible by means of the user interface (19).
